# EUROPEAN PATENT APPLICATION

(11) **EP 2 666 355 A1**
(43) Date of publication of application: **27.11.2013**
(21) Application number: 13168198.3
(22) Date of filing: 17.05.2013
(51) Int. Cl.: A01N 25/04, A01N 25/22, A01N 43/90, A01N 43/76, A01N 43/40, A01P 13/00

(54) **Herbicidal aqueous compositions comprising fatty acid esters**

(30) Priority: 21.05.2012 DK 201200355
(71) Applicant: Cheminova A/S, 7673 Harboøre (DK)
(72) Inventor: Battal, Turgut, 7600 Struer (DK); Christensen, Casper, Reinhard, Christensen, 7500 Holstebro (DK); Pedersen, Morten, 7620 Lemvig (DK); Frederiksen, Henrik, K., 7500 Holstebro (DK); Laursen, Peter, C., 7500 Holstebro (DK)
(74) Representative: Rasmussen, Torben Ravn

(57) **Abstract**

The present invention relates to herbicidal aqueous compositions comprising a combination of at least one aryloxyphenoxypropionic acid herbicide and at least one triazolopyrimidine herbicide in addition to at least one C6-C14 fatty acid ester solvent, suitable for selectively controlling weeds in crops of cultivated plants. The compositions show high stability for the aryloxyphenoxypropionic acid herbicide as well as the triazolopyrimidine herbicide.

## Description

### Introduction

The present invention relates to herbicidal aqueous compositions comprising a combination of at least one aryloxyphenoxypropionic acid herbicide and at least one triazolopyrimidine herbicide in addition to at least one C6-C14 fatty acid ester solvent, suitable for selectively controlling weeds in crops of cultivated plants, typically in crops of cereals, rape, sugar beet, sugar cane, rice, maize, plantation crops, soybeans and cotton.

### Background

Mixing of pesticides is quite common in modem agriculture and may save time and labor and may reduce equipment and application costs. In addition, such mixtures might also control a range of pests or enhance the control of one or a few pests in comparison to individual application of the pesticides. Tank mixes of two or more herbicides are more common than other pesticide combinations. When applying mixtures of pesticides, i.e. two or more, it is often advantageously to provide a single concentrated composition of the pesticidal active compounds, e.g. herbicides, fungicides or insecticides, to the end user rather than individual compositions of each active ingredient to be mixed prior to application - often referred to as tank-mixing. This is more user and environmental friendly and reduces the risk of applying undesirable mixing ratios of the active ingredients that may cause damage e.g. to the crops of cultivated plants in which plant pests are to be controlled such as weeds, fungi or insects. However, in single concentrated compositions it is often a problem that the two or more actives present may cause degradation of one another during storage, or the chemical environment in the concentrated composition may favor one of the actives in terms of stability and the other(s) caused to be degraded over time. Aryloxyphenoxypropionic acid herbicides as well as triazolopyrimidine herbicides are both known classes of selective herbicides, and belong to the group of herbicides that act by inhibition of lipid synthesis (ACCase-inhibitors) and inhibition of acetolactate synthase (ALS-inhibitors) respectively. Fenoxaprop-P-ethyl as a representative from the class of aryloxyphenoxypropionic acids is degraded in the presence of acids and alkalis. Florasulam, a representative from the class of triazolopyrimidine herbicides, on the other hand tends to hydrolize in basic medium. Accordingly, both actives compounds have preference for different chemical environments to provide long term stability and such preferences are not easily combined in a single concentrated composition. Tank mixing of fenoxaprop-P-ethyl or clodinafop-propargyl (another representative from the aryloxyphenoxypropionic acid herbicides) with florasulam has been described previously, e.g. from Mededelingen - Faculteit Landbouwkundige en Toegepaste Biologische Wetenschappen (Universiteit Gent) Publisher: Universiteit Gent, Faculteit Landbouwkundige en Toegepaste Biologische Wetenschappen: (1999), 64(3b), pp. 693-712; and (1998), 63(3a), pp. 735-742; but as mentioned above, tank-mix application is not always desirable. In United States patent no. US 6,849,575 a two phase aqueous composition of clodinafop-propargyl is provided comprising rapeseed oil methyl ester as the oil phase (a C18 unsaturated fatty acid methyl ester).

Stabilization of ALS-inhibitors in liquid formulations based on various organic solvents such as vegetable oils is suggested in US patent application no. US 2006/0205596 by inclusion of one or more inorganic salts in the formulation, or by inclusion of one or more sulfosuccinates as suggested in US patent application no. US 2005/0032647.

International patent publication no. WO 2009/012979 disclose the use of certain fatty acid esters as adjuvants for biological efficacy enhancement of the triazolopyrimidine herbicide pyroxsulam, preferably methylated C16-C 18 fatty acids.

It has now been found that stable compositions comprising a combination of at least one aryloxyphenoxypropionic acid herbicide and at least one triazolopyrimidine herbicide can be prepared using environmental safe ingredients demonstrating improved chemical stability of the herbicidal active ingredients as well as good storage stability for prolonged periods of time and/or at elevated temperatures. It has further been found, that whereas the use of long chain fatty acid esters (i.e. more than 16 carbon atoms in the fatty acid chain) apparently do not negatively influence on the stability of the individual active ingredients, such long chain fatty acids do not stabilize compositions comprising both active ingredients. Compositions based on short chain fatty acids esters (i.e. shorter than 16 carbon atoms in the fatty acid chain, e.g. C6-C 14 fatty acid esters) on the other hand stabilize compositions comprising both active ingredients as herein demonstrated.

### Description of the invention

The present invention provides herbicidal aqueous compositions for the selective control of weeds that, in addition to any optional customary inert formulation excipients, comprises
a) a mixture of
   a1) at least one aryloxyphenoxypropionic acid herbicide;
   a2) at least one triazolopyrimidine herbicide:
b) one or more C6-C14 fatty acid ester solvent(s).

Thus, compositions are provided in the form of oil droplets (organic phase) suspended in an aqueous phase, wherein, in one embodiment of the invention, the active ingredient a1) are present (dissolved) in the organic phase and the active ingredient a2) present (suspended) in the aqueous phase; or vice versa. Suitably, the herbicide(s) in excess of the other is present in the oil phase, and according to a preferred embodiment of the invention as described herein, the aryloxyphenoxypropionic acid herbicide(s) are present in the oil phase and the triazolopyrimidine herbicide(s) present in the aqueous phase. Such type of formulation often referred to as a suspo-emulsion. However, in a another embodiment of the invention, both active herbicides a1) and a2) may be present (dissolved) in the organic phase suspended as oil droplets in the aqueous phase. This type typically being referred to as an oil-in-water emulsion. Thus, the difference between the two types being whether or not the two actives are both present in the organic phase. In case more than one active compound is present from either or both classes a1) and a2), either of the additional actives may be present in the organic or aqueous phase. In a preferred embodiment the compositions are provided in the form of suspo-emulsions with the active ingredient(s) a1) present (dissolved) in the organic phase and with the active ingredient(s) a2) present (suspended) in the aqueous phase.

Accordingly, in one aspect of the invention there are provided a
I) herbicidal aqueous composition comprising
   an oil phase comprising
      a1) at least one aryloxyphenoxypropionic acid herbicide;
      b) one or more C6-C14 fatty acid ester solvent(s);
         and
         an aqueous phase comprising;
      a2) at least one triazolopyrimidine herbicide;
         wherein the oil phase is suspended in the aqueous phase;
   and in another aspect a
II) herbicidal aqueous composition comprising
   an oil phase comprising
   a2) at least one triazolopyrimidine herbicide;
      b) one or more C6-C14 fatty acid ester solvent(s);
      and
      an aqueous phase comprising;
   a1) at least one aryloxyphenoxypropionic acid herbicide;
      wherein the oil phase is suspended in the aqueous phase;
      and in another aspect a
III) herbicidal aqueous composition comprising
   an oil phase comprising
   a1) at least one aryloxyphenoxypropionic acid herbicide;
   a2) at least one triazolopyrimidine herbicide;
   b) one or more C6-C14 fatty acid ester solvent(s);
   and
   an aqueous phase;
   wherein the oil phase is suspended in the aqueous phase.

The present invention further provides a method for stabilising herbicidal mixtures of a1) at least one aryloxyphenoxypropionic acid herbicide and a2) at least one triazolopyrimidine herbicide; using the above composition. Preferably the formulations provide stabilisation of the mixtures to an extent that less than about 10%, more preferably 5%, of the initial concentration of the active ingredients a1) and a2) have degraded when the formulations are stored at 54°C for 14 days; or less than about 20%, more preferably 10%, of the initial concentration of the active ingredients a1) and a2) has degraded when the compositions are stored at 70°C for 14 days

Representative aryloxyphenoxypropionic acid herbicides a1) (including hetero-aryloxyphenoxypropionic acid herbicides) include
a1.1) "fenoxaprop-P" and its esters, such as the ethyl ester "fenoxaprop-P-ethyl"
   (=(R)-2-[4-(6-chlorobenzoxyzolyl-2-yloxy)-phenoxy]propionic acid and its ethyl ester), also in the use form of the racemate "fenoxaprop"
   and its esters, such as the ethyl ester;
a1.2) "quizalofop-P" and its esters, such as the ethyl or tefuryl ester (= (R)-2-[4-(6-chloroquinoxalin-2-yloxy)phenoxy]propionic acid or its ethyl ester or its tetrahydrofurfuryl ester), also in the form of the racemate "quizalofop" and its esters; cf. also as the specific ester "propaquizafop";
a1.3) "propaquizafop", the 2-isopropylideneamino-oxyethyl ester of quizalofop-P;
a1.4) "fluazifop-P" and its esters, such as the butyl ester (=(R)-2-[4-(5-trifluoromethylpyrid-2-yloxy)-phenoxy]propionic acid or its butyl ester), also in the use form of the racemate "fluazifop" and its ester;
a1.5) "haloxyfop-P" and its esters, such as the methyl ester (=(R)-2-[4-(3-chloro-5-trifluoromethylpyrid-2-yl-oxy)phenoxy]propionic acid or its methyl ester), also in the use form of the racemate "haloxyfop" and its esters, such as the methyl or the etotyl ester;
a1.6) "cyhalofop" and its esters, such as the butyl ester (=(R)-2-[4-(4-cyano-2-fluorophenoxy)phenoxy]propionic acid or its butyl ester;
a1.7) "clodinafop" and its esters, such as the propargyl ester (=(R)-2-[4-(5-chloro-3-fluoropyrid-2-yloxy)phenoxy]propionic acid or its propargyl ester).

Preferred aryloxyphenoxypropionic acid herbicides are fenoxaprop-P and clodinafop and their esters, more preferred is fenoxaprop-P and its esters, preferably as the ethyl ester fenoxaprop-P-ethyl.

Representative triazolopyrimidine herbicides a2) include
a2.1) "florasulam" (=2',6',8-trifluoro-5-methoxy[1,2,4]triazolo[1,5-c] pyrimidine-2-sulfonanilide);
a2.2) "cloransulam" and its esters, such as the methyl ester (=3-chloro-2-(5-ethoxy-7-fluoro[1,2,4]triazolo[1,5-c]pyrimidin-2-ylsulfonamido) benzoic acid);
a2.3) "diclosulam"(=2',6'-dichloro-5-ethoxy-7-fluoro[1,2,4]triazolo[1,5-c] pyrimidine-2-sulfonanilide);
a2.4) "flumetsulam" (=2',6'-difluoro-5-methyl[1,2,4]triazolo[1,5-a] pyrimidine-2-sulfonanilide);
a2.5) "metosulam" (=2',6'-dichloro-5,7-dimethoxy-3'-methyl[1,2,4]triazolo[1,5-a]pyrimidine-2-sulfonanilide);
a2.6) "penoxsulam" (=3-(2,2-difluoroethoxy)-N-(5,8-dimethoxy[1,2,4] triazolo [1,5-c]pyrimidin-2-yl)-α,α,α-trifluorotoluene-2-sulfonamide);
a2.7) "pyroxsulam" (=N-(5,7-dimethoxy[1,2,4]triazolo[1,5-a]pyrimidin-2-yl)-2-methoxy-4-(trifluoromethyl)pyridine-3-sulfonamide).
A preferred triazolopyrimidine herbicide is florasulam

Common for both a1 and a2 herbicides mentioned above is that they all have low solubility in water at ambient temperatures.

Preferred mixtures a) of aryloxyphenoxypropionic acid herbicides and triazolopyrimidine herbicides are:
(a1.1+a2.1); (a1.1+a2.2); (a1.1+a2.3); (a1.1+a2.4); (a1.1+a2.5); (a1.1+a2.6); (a1.1+a2.7); and
(a1.2+a2.1) (a1.2+a2.2); (a1.2+a2.3); (a1.2+a2.4); (a1.2+a2.5); (a1.2+a2.6); (a1.2+a2.7); and
(a1.3+a2.1); (a1.3+a2.2); (a1.3+a2.3); (a1.3+a2.4); (a1.3+a2.5); (a1.3+a2.6); (a1.3+a2.7); and
(a1.4+a2.1); (a1.4+a2.2); (a1.4+a2.3); (a1.4+a2.4); (a1.4+a2.5); (a1.4+a2.6); (a1.4+a2.7); and
(a1.5+a2.1); (a1.5+a2.2); (a1.5+a2.3); (a1.5+a2.4); (a1.5+a2.5); (a1.5+a2.6); (a1.5+a2.7); and
(a1.6+a2.1); (a1.6+a2.2); (a1.6+a2.3); (a1.6+a2.4); (a1.6+a2.5); (a1.6+a2.6); (a1.6+a2.7); and
(a1.7+a2.1); (a1.7+a2.2); (a1.7+a2.3); (a1.7+a2.4); (a1.7+a2.5); (a1.7+a2.6); (a1.7+a2.7);

More preferred mixtures a) of aryloxyphenoxypropionic acid herbicide and triazolopyrimidine herbicide are (a1.1+a2.1), and even more preferred is mixture of a1)fenoxaprop-P-ethyl and a2)florasulam.

The ratio between the actives a1) and a2) of the herbicide mixture is generally between 50:1 and 1:50, more preferably 25:1 to 1:25, and even more preferably 20:1 to 1:10. In a preferred embodiment, the aryloxyphenoxypropionic herbicide(s) are present in excess of the triazolopyrimidine herbicide(s), e.g. the ratio between the actives a1) and a2) of the herbicide mixture is generally between 50:1 and 1.1:1, preferably between 25:1 to 1.1:1 and more preferably between 20:1 to 1.1:1, and most preferably between 20:1 to 10:1. However, in some instances depending on choice of active compounds a ratio around 1:1 may also be useful.

The total concentration of the herbicide mixture a) is generally between 0.1 and 500 g/l, preferably 0.5 and 300 g/l and more preferably 1 and 200 g/l and even more preferably between 10 and 100 g/l.

The amount of esters of fatty acids present is generally between 50 to 800 g/l, preferably 100-600 g/l, more preferably 150-500 g/l and most preferable between 200-500 g/l.

The ratio of herbicide mixture (component a) to fatty acid ester solvent (component b) present is preferably in a ratio between 10:1 to 1:20. Most preferred ratios of the a) to b) are between 5:1 to 1:15 and more preferably between 2:1 to 1:10 When the component b) is present in excess of the component a) preferred ratios of herbicide mixture a) to fatty acid ester solvent b) are 1:1.5 to 1:20. Most preferred ratios of the component a) to component b) are between 1:2 to 1:15, more preferably between 1:2 to 1:10 and even more preferably between 1:2 to 1:8 and most preferably between 1:2 to 1:5.

The C6-C14 fatty acid ester solvent(s), component b) are, for example, obtainable from chained fatty acids by esterification with alkanols, and include (C1-C10)-alkyl (C6-C14)-fatty acid esters. The C6-C14 fatty acid ester may be prepared from plant oils. Preferred fatty acids, e.g. of plant oils, have a carbon chain length of 8 to 14 (i.e. (C8-C14)-fatty acid esters), in particular 8 to 12 carbon atoms (i.e. (C8-C12)-fatty acid esters, and most preferably 8 to 10 (i.e. (C8-C10)-fatty acid esters), and such carbon chains being either saturated or unsaturated, i.e. one or more double bonds being present. Esters of saturated fatty acids are preferred. In a preferred embodiment the alkyl part of the fatty acid esters consist of 1-8 carbon atoms (straight or branched). Preferably (C1-C6)-alkyl esters are used (e.g. methyl, ethyl, propyl, iso-propyl, butyl, iso-butyl, sec-butyl, pentyl and hexyl), more preferably the alkyl part consist of 1-3 carbon atoms (i.e. (C1-C3)-alkyl), even more preferably 1-2 carbon atoms (i.e. (C1-C2)-alkyl), and most preferably methyl esters of fatty acids are used, and even more preferably methylated fatty acids, e.g. methylated plant oils, wherein the fatty acid has a carbon chain length between 6-14, more preferably 8-14 and even more preferably 8-12. Examples of esters of fatty acids are Stepan C-25 methyl ester, Stepan C-40 methyl ester, Stepan 653 or Stepan IPM all available from Stepan, or Witconol 2301, Witconol 2307, Witconol 2308, Witconol 2309 all available from Witco Corporation, ethyl caproate available from SigmaAldrich, or Edenor ME C6-C10, Edenor ME C12 98/100 both available from Cognis or Tegosoft MM and Tegosoft SH both available from Goldschmidt, or CE-1095 (methyl decanoate) available from P&G, as well as those of the Agnique and Agnique ME series of products available from Cognis such as Agnique 610G, Agnique ME 890, Agnique ME 1298 and Agnique ME 12C-F. It is advantageous to choose esters of fatty acids with low viscosity to ease formation of compositions. Further, as the solubility of the herbicidal active ingredients varies among the esters of fatty acids, one may advantageously choose among those having as high a solubility of the actives as possible without the need to apply e.g. heating to increase solubility of the actives or vigorous stirring during the preparation concentrated compositions. However esters of fatty acids either having a solid or waxy consistency at room temperature may also be useful. Fatty acids are usually obtained from a natural source and are therefore mixtures of acids with various chain lengths. As used herein, the carbon number of a particular fatty acid refers to the number of carbon atoms of the main acid component, i.e. the component prevailing in the highest amount. Thus, apart from an ester of a fatty acid having a specified carbon number, minor amounts of esters of fatty acids having a smaller or higher amount of carbon atoms in the acid part may occur. As an example methyl coconate usually comprises about 45-55% of the main C12 methyl ester, the rest being methyl esters of acids having 6, 8, 10, 14, 16 or 18 carbon atoms in various but individually less amounts than the acid having 12 carbon atoms.

The formulation may further comprise, as component c) one or more adjuvants, e.g. surface active agents, wetters, spreading agents and dispersing agents. Wetting agents or spreading agents increases the surface area covered by a given volume of a spray mixture. The adjuvant is in the present context defined as a component capable of enhancing the herbicidal activity of the active compounds in the aqueous composition. The adjuvant(s) may be present in either the organic or aqueous phase (depending on solubility).

Adjuvants are classified by function and chemistry. Both approaches have inherent difficulties because components are often claimed to have more than one function and complex mixtures of chemicals are rarely fully chemically disclosed. Some of the terms used for adjuvants in herbicide or pesticide products are crop oil concentrate, dispersant, surfactant, thickener, vegetable oil, modified seed oil, petroleum oil, spreader and sticker.

Typical surfactants used as adjuvants come from a broad range of chemical compounds. Depending on the herbicides to be formulated, suitable surfactant compounds are non-ionic, cationic and/or anionic surfactants and surfactant mixtures having good emulsifying, dispersing and wetting properties. Surfactants are, for example, non-aromatic-based surfactants, based for example on heterocycles, olefins, aliphatics or cycloaliphatics, examples being surface-active, mono- or poly-alkyl-substituted and subsequently derivatized, e.g., alkoxylated, sulfated, sulfonated or phosphated, pyridine, pyrimidine, triazine, pyrrole, pyrrolidine, furan, thiophene, benzoxazole, benzothiazole, and triazole compounds, and/or aromatic-based surfactants, examples being mono-, or poly-alkyl-substituted and subsequently derivatized, e.g., alkoxylated, sulfated, sulfonated or phosphated benzenes or phenols. Such surface active compounds are generally known and readily available on a commercial scale.

Examples of surfactants are listed below, wherein EO = ethylene oxide units, PO = propylene oxide units, and BO=butylene oxide units, and where the surfactants from group s1-s18 are non-aromatic based, whereas the s19-s21 surfactants are aromatic based:
s1) C10-C24 alcohols, which may be alkoxylated, with for example 1-60 alkylene oxide units, preferably 1-60 EO and/or 1-30 PO and/or 1-15 BO in any order. The terminal hydroxyl groups of these compounds may be endgroup-capped by an alkyl, cycloalkyl or acyl radical having 1-24 carbon atoms.
s2) Anionic derivatives of the products described under s1), in the form of ether carboxylates, sulfonates, sulfates, and phosphates, and their inorganic (eg, alkali metal and alkaline earth metal) and organic salts (eg, based on amine or alkanolamine).
s3) Fatty acid alkoxylates and triglyceride alkoxylates or alkoxylated vegetable oils such as soybean oil, rapeseed oil, corn germ oil, sunflower oil, cotton seed oil, linseed oil, coconut oil, palm oil, thistle oil, walnut oil, peanut oil, olive oil or castor oil, especially rapeseed oil, salts of aliphatic, cycloaliphatic, and olefinic carboxylic acids and polycarboxylic acids.
s4) Fatty acid amide alkoxylates; alkylene oxide adducts of alkynediols; sugar derivatives such as amino sugars and amido sugars, glucitols alkylpolyglycosides or such as sorbitan esters (eg ethoxylated sorbitan esters), cyclodextrin esters or ethers.
s5) Surface-active cellulose derivatives and algin derivatives, pectin derivatives and guar derivatives; polyol-based alkylene oxide adducts. Surface-active polyglycerides and their derivatives.
s6) Alkanesulfonates, paraffin sulfonates, and olefin sulfonates; sulfosuccinate-based surfactants, such as dialkylsuccinates.
s7) Alkylene oxide adducts of fatty amines, quaternary ammonium compounds having 8 to 22 carbon atoms
s8) Surface-active zwitterionic compounds such as taurides, betaines, and sulfobetaines
s9) Silicone-based and/or silane-based surface-active compounds.
s10) Perfluorinated or polyfluorinated surface-active compounds.
s11) Surface-active sulfonamides such as those from Bayer.
s12) Surface-active polyacrylic and polymethacrylic derivatives
s13) Surface-active polyamides such as modified gelatins or derivatized polyaspartic acid.
s14) Polyvinyl adjuvant-type compounds such as modified polyvinylpyrrolidone (eg alkylpolyvinylpyrrolidone such as C4-C20 alkyl polyvinylpyrrolidone) or the derivatized polyvinyl acetates or the polyvinyl butyrates or modified polyvinyl alcohols.
s15) Surface-active compounds based on maleic anhydride and/or reaction products of maleic anhydride, and also copolymers containing maleic anhydride and/or reaction products of maleic anhydride, such as the A
s16) Surface-active derivatives of montan waxes, polyethylene waxes, and polypropylene waxes.
s17) Surface-active phosphonates and phosphinates
s18) Polyhalogenated or perhalogenated surfactants.
s19) Phenols, which may have been alkoxylated, examples being phenyl C1-C4 alkyl ethers or (poly)alkoxylated phenols [i.e., phenol (poly) alkylene glycol ethers], having for example 1 to 50 alkyleneoxy units in the (poly)alkyleneoxy moiety, the alkylene moiety having preferably 1 to 4 carbon atoms in each case, preferably phenol reacted with 3 to 10 mol of alkylene oxide, (poly) alkylphenols or (poly) alkylphenol alkoxylates [i.e., polyalkylphenol (poly) alkylene glycol ethers], having for example 1 to 12 C atoms per alkyl radical and 1 to 150 alkyleneoxy units in the polyalkyleneoxy moiety, preferably triisobutylphenol or tri-n-butylphenol reacted with 1 to 50 mol of ethylene oxide, polyarylphenols or polyarylphenol alkoxylates [i.e., polyarylphenol (poly)alkylene glycol ethers], examples being tristyrylphenol polyalkylene glycol ethers having 1 to 50 alkyleneoxy units in the polyalkyleneoxy moiety, preferably tristyrylphenol reacted with 1 to 50 mol of ethylene oxide.
s20) Compounds which, formally, constitute the reaction products of the molecules described in s19) with sulfuric acid or phosphoric acid, and their salts neutralized with suitable bases, by way of example the acidic phosphoric ester of triply ethoxylated phenol, the acidic phosphoric ester of a nonylphenol reacted with 9 mol of ethylene oxide, and the triethanolamine-neutralized phosphoric ester of the reaction product of 20 mol of ethylene oxide and 1 mol of tristyrylphenol.
s21) Benzenesulfonates such as alkyl- or arylbenzenesulfonates, examples being (poly)alkylbenzenesulfonates and (poly)aryl-benzenesulfonates, both acidic and neutralized with suitable bases, having for example 1 to 12 carbon atoms per alkyl radical and/or having up to 3 styrene units in the polyaryl radical, preferably (linear) dodecylbenzenesulfonic acid and its oil-soluble salts such as the calcium salt or the isopropylammonium salt of dodecylbenzene-sulfonic acid.
s22) Copolymers composed of EO, PO and/or BO units such as, for example, block copolymers having a molecular weight of 400 to 10⁸.
s23) Alkylene oxide adducts ofC1-C9 alcohols.

The specific choice and amount of adjuvant(s) depends on the particular active ingredient(s) selected for the composition and the desired absolute and relative amounts of the individual components. Suitable amounts can be determined by routine experimentation, the test being that essentially no or only an insignificant phase separation, sedimentation or flocculation is exhibited by the composition following storage at 20-25 °C or higher, e.g. 40°C or 54°C for a period of 24 hours, or, for preferred embodiments, following a longer period of storage over a broader range of temperatures as indicated above.

When present, typically the total concentration of all adjuvants in the composition is 600 g/l or less, for example 1 to 600 g/l, excluding the weight of counter ions, if present. The amount is suitably higher than 10 g/l (e.g. between 10 - 600 g/l), preferably higher than 20 g/l (e.g. between 20-600 g/l), more preferably between 30 to 500 g/l and most preferably between 50 to 400 g/l.A high amount of adjuvant is however normally on the expense of having to lower the amount of active ingredient and/or the amount of water, and too much adjuvant may not necessarily provide the desired stability of the concentrate. Furthermore, if the formulation becomes too viscous then it will be difficult to handle. It is preferred that the amount of water as a minimum constitutes 1% of the concentrated composition, and more preferably 5% as a minimum.

Further optionally auxiliaries which may be included in either the organic or aqueous phase (depending on solubility) of the compositions as described herein, are, as optional component d), preferably selected among, but not limited to, pH adjusters, antifreeze agents, preservatives, antifoaming agents, colorants and dyes, co-herbicides, UV protectants, and co-solvents. Such auxiliaries are generally known within the art of formulation chemistry, and although a specific ingredient is classified as falling within one category - including the adjuvants, it may well serve the purpose of any of the others. The amount of further auxiliaries is preferably between 0-200 g/l and more preferably between 1-150 g/l, and most preferably between 5-100 g/l.

A variety of different pH adjusters can be useful with the herbicide compositions of the invention. The pH adjuster may be any of a variety of suitable organic or inorganic acids or bases, of any useful strength or concentration that can be added to a composition, preferably without causing substantial or undue negative effects such as reaction with an ingredient of the composition, precipitation, etc. It will be understood that an pH adjuster can be in a concentrated or diluted form, as necessary or desirable. Nonlimiting examples of pH adjusters include organic acids and alkali metal compounds as well as sulfuric acid, phosphoric acid, hydrochloric acid, nitric acid, acetic acid, perchloric acid, and polyphosphoric acid. The organic acids include those such as citric, malic, adipic, cinnamic, fumaric, maleic, succinic, and tartaric acid, and the mono-, di-, or tribasic salts of these acids are suitable organic acid salts. Suitable salts of these acids are the soluble or meltable salts and include those salts in which one or more acidic protons are replaced with a cation such as sodium, potassium, calcium, magnesium, and ammonium. Alkali metal compounds include hydroxides of alkali metals such as sodium hydroxide and potassium hydroxide, carbonates of alkali metals such as sodium carbonate and potassium carbonate, hydrogencarbonates of alkali metals such as sodium hydrogencarbonate and alkali metal phosphates such as sodium phosphate. These and other pH adjusters can be used alone or in combination. Depending on choice of active ingredients present, preferred amounts will be sufficient to produce concentrated aqueous compositions (i.e. prior to dilution, e.g. before use in spray equipment) having a pH range lower than 9 as measured at ambient temperatures, and preferably lower than 8 and more preferably lower than 7; a pH value higher than 1, preferably higher than 2 and more preferably higher than 3. In a preferred embodiment the pH value is between 1-9, more preferably between 2-7, even more preferably between 2-6 and most preferably between 3-6. However, one need not necessarily add pH adjusters as the concentrated composition by itself may already have a pH value that is within the preferred range depending on choice of components comprised in the composition including any optionally auxiliaries present.

Examples of the antifreezing agent include ethylene glycol, diethylene glycol, propylene glycol and the like.

Typical preservatives include methyl and propyl parahydroxybenzoate, 2-bromo-2-nitro-propane-1,3-diol, sodium benzoate, formaldehyde, glutaraldehyde, O-phenylphenol, benzisothiazolinones, 5-chloro-2-methyl-4-isothiazolin-3-one, pentachlorophenol, 2-4-dichlorobenzylalcohol and sorbic acid and derivatives thereof.

Preferred antifoam agents are siloxan derivatives or perfluoroalkylphosphonic/perfluoroalkylphosphinc acids, in particular polydimethylsiloxanes, such as Rhodorsil 416 or Rhodosil 454 from Rhodia or mixtures comprising perfluoro-(C6-18)-alkylphosphonic acids and perfluoro-(C6-18)-alkylphosphinic acids, such as Fluowet PL80, Fluowet PP from Clariant. Also preferred are the silicone based products Silcolapse, eg Silcolapse 430 or Silcolapse 5020 available from Rhodia.

The compositions of the present invention may contain one or more co-herbicides, i.e. herbicides different from the ones present as component a). Co-herbicides suitable for use in the present invention include PSII inhibitors, PSI inhibitors, ALS inhibitors, HPPD inhibitors, ACCase inhibitors, Cell Division inhibitors, PDS inhibitors, lipid metabolism inhibitors and PPGO inhibitors. Representative co-herbicides include atrazine, halosulfuron-methyl, terbuthylazine, dicamba, fluthiacet-methyl, pyridate, butafenacil, terbutryn, simazine, prosulfuron, diphenamid, napropamide, naproanilide, acetochlor, alachlor, butachlor, dimethachlor, dimethenamid, dimethenamid-P, fentrazamide metazachlor, metolachlor, S-metolachlor, pethoxamid, pretilachlor, propachlor, propisochlor, thenylchlor, flufenacet mefenacet, primisulfuron, imazapyr, sethoxydim, flufenacet, , metribuzin, isopropazol, isoxaflutole, iodosulfuron-methyl-sodium, isoxachlortole, sulfentrazone, mesotrione, flurtamone, sulcotrione, tembotrione, azafenidin, pendimethalin, trifluralin, flumiclorac-pentyl, bentazone, bromoxynil, nicosulfuron, cyanazine, rimsulfuron, imazaquin, amitrole, thifensulfuron, thifensulfuron-methyl, bilanafos, metobenzuron, diuron, MCPA, MCPB, MCPP, 2,4-D, diflufenzopyr, clopyralid, fluroxypyr, quinmerac, dimethametryn, esprocarb, pyrazosulfuron-ethyl, benzofenap, clomazone, carfentrazone-ethyl, butylate, EPTC, aclonifen, fomesafen, flumioxazin, paraquat, glyphosate, glufosinate, S-glufosinate, sulfosate, imazamox, imazethapyr, imazapic, imazapyr and the agriculturally acceptable salts and esters thereof.

In addition to the herbicide mixture a) and optionally at least one compound from amongst the co-herbicides set forth above, the compositions according to the invention may contain at least one herbicide safener, e.g. to prevent damage to the crop plant caused by the herbicide(s) applied including the acetamide and/or co-herbicide. Suitable safeners include benoxacor, cloquintocet, dichlormid, fenclorim, flurazole, fluxofenim, furilazole, isoxadifen, mefenpyr and the agriculturally acceptable salts and esters thereof such as cloquintocet-mexyl, isoxadifen-ethyl and mefenpyr-diethyl. Particulary preferred safeners include cloquintocet-mexyl, mefenpyr-diethyl and isoxadifen-ethyl. If the composition comprises a safener, the weight ratio of herbicide mixture a) to safener is preferably 1: 1 to 30: 1. The safener compound may be dissolved in the oil phase of the compositions as described herein or suspended in the aqueous phase. In a preferred embodiment the safener compound is present in the oil phase.

The abovementioned herbicides a1) and a2), co-herbicides and safeners are described and characterized in "The Pesticide Manual", Twelfth Edition, 2000, Crop Protection Publications or in other customary agronomical publications.

A co-solvent or mixtures of two or more co-solvents, i.e. different from the fatty acid ester solvent b), may be included to further improve the stability of the herbicide mixture and the concentrated composition as such. Preferably such co-solvents are totally insoluble or only sparingly soluble in water. By sparingly soluble in water is meant co-solvents that have a solubility in water of less than 10 g pr. 100 ml water (i.e. less than 10%) at 25°C, preferably less than 7% and more preferably less than 5% and even more preferably less than 1%. For a list of solvent properties see for example Handbook of organic solvent properties, published by Arnold (1996) or The Properties of Solvents, Yizhak Marcus, published by Wiley (1998), especially table 4.6. Among examples of co-solvents are aromatic hydrocarbons derived from benzene, such as, for example, toluene, xylenes, mesitylene, diisopropylbenzene and its higher homologs, indane and naphthalene derivatives, such as 1-methylnaphthalene, 2-methylnaphthalene; C5-C12 aliphatic hydrocarbons (straight, branched or cyclic), such as, for example, pentane, hexane, cyclohexane, octane, 2-ethylhexane, decane; C5-C10 aliphatic alcohols (straight or branched), in particular C6-C9, such as hexanol, 2-ethyl butanol, heptanol, octanol, 2-octanol, and 2-ethylhexanol; aromatic alcohols such as benzyl alcohol, cyclic aliphatic ketones such as cyclohexanone; mixtures of aromatic and aliphatic hydrocarbons, such as, for example, the corresponding "aromatic" mineral oils, such as mineral oils from the Solvesso series (available from Exxon) and Shell Fluid 2613 and 2613/8M (both available from Shell); halogenated aliphatic hydrocarbons, such as methylene chloride; halogenated aromatic hydrocarbons, such as chlorobenzene, and dichlorobenzenes; and mixtures thereof.

The compositions may also contain other compatible components, for example, plant growth regulators, fungicides, insecticides, and the like and can be formulated with liquid fertilizers or solid, particulate fertilizer carriers such as ammonium nitrate, urea and the like.

To summarize, there are provided aqueous compositions comprising a mixture of water and
a) a mixture of
   a1) at least one aryloxyphenoxypropionate herbicide;
   a2) at least one triazolopyrimidine herbicide;
b) one or more C6-C14 fatty acid ester solvent(s)
c) optionally one or more adjuvants;
d) optionally one or more customary inert formulation auxiliaries;
or in terms of preferred embodiments:

Aqueous compositions comprising
a) 1-500 g/l a mixture of
   a1) at least one aryloxyphenoxypropionate herbicide;
   a2) at least one triazolopyrimidine herbicide;
b) 1-800 g/l of one or more C6-C14 fatty acid ester solvent(s)
c) 0-600 g/l of one or more adjuvants;
d) 0-200 g/l of one or more customary inert formulation auxiliaries;
and water to 1 liter.

Further preferred embodiments are as herein described previously.

In another aspect of the present invention, there is also provided a method of preparing aqueous emulsion compositions as described herein. The compositions are generally produced by at least a three step process comprising of:
- Preparation of an oil phase,
- Optional: Preparation of a millbase,
- Preparation of aqueous phase,
- Emulsification.

### Preparation of oil phase:

Homogeneous solution of active ingredients are prepared under constant stirring by addition of solvent and co-solvents if necessary as well as any of the optional customary inert formulation auxiliaries.

### Preparation of millbase (optional):

A slurry is prepared by charging water and under high shear mixing, adding optional customary inert formulation auxiliaries. Mixing is continued until all are dissolved. Active ingredient(s) are then charged. pH of the solution afterwards can be adjusted if necessary. Optional thickening agents are often added last under constant stirring.

The slurry may then be wet milled using a proper wet grinding mill for achieving the desired particle size range. In these mills the slurry along with grinding media (pearls of about 1 mm diameter made of steel or glasses) is stirred with a high speed rotating shaft fitted with rotating disc in a water cooled stationary cylinder. The mill can be vertically or horizontally designed. The process can be continuous or batch wise. Closed systems are preferably used to avoid entrapping of air. This step may include addition of any of the optional customary inert formulation auxiliaries. The milling is preferably performed to provide an average particle size of less than 20 micron, preferably an average particle size between 20-0.1, more preferably 10-0.5 micron and most preferably an average particle size between 5-1 micron. Average particle size is denoted by DV50 or Z average is the median particle size determined using available analytical devices such as Malvern Mastersizer.

### Preparation of aqueous phase:

Water is charged to vessel, and is optionally followed by the millbase if a suspo-emulsion type formulation is desired. Adjuvants as well as any of the optional customary hydrophilic inert formulation auxiliaries are added and stirred until all are dissolved/dispersed. If excessive foaming in this step is observed/expected, depending of choice of auxiliaries, an antifoaming agent is advantageously added, as an undesired high level of air bubbles as dispersion may cause serious problems in emulsification process.

### Emulsification:

Aqueous phase is then added to oil phase and high shear stirring is applied until the desired particle size is achieved. If the optional thickening agent is present then the emulsified formulation is blended in a low shear mixer with the solution of the thickening agent.

If needed, regulation of pH may take place at any stage but conveniently takes place during the last step and most advantageously, regulation of pH is often the absolute final step, as some formulation ingredients added after addition of dedicated pH regulators may alter the pH.

The order of addition of the various ingredients used in both the organic and aqueous phase is of minor importance. Some of the optionally auxiliaries, including any adjuvants, may even be added after the mixing of the organic and aqueous phase. One skilled in the art will recognize that any one of a variety of apparatus may be used to accomplish the mixing steps. Intensive homogenisation is not required but can improve the general homogeneity of the composition. Further, if a small oil droplet size is desired intensive homogenisation is a conceivable method. In either of the above steps, heat may be applied to ease the formation of a homogeneous phase.

The composition of the invention may be used against a large number of agronomically important weeds, including Stellaria, Nasturtium, Agrostis, Digitaria, Avena, Setaria, Sinapis, Lolium, Solanum, Phaseolus, Echinochloa, Scirpus, Monochoria, Sagittaria, Bromus, Alopecurus, Sorghum halepense, Rottboellia, Cyperus, Abutilon, Sida, Xanthium, Amaranthus, Chenopodium, Ipomoea, Chrysanthemum, Galium, Panicum, Brachiara, Viola, and Veronica. For purposes of the present invention, the term "weeds" includes undesirable crop species such as volunteer crops.

The composition of the invention is suitable for selectively controlling weeds in crops of cultivated plants, typically cereals, rape, sugar beet, sugar cane, rice, maize, plantation crops and in crops of soybeans and cotton. Crops of cultivated plants will also be understood as meaning those crops that have been made tolerant to herbicides or classes of herbicides by conventional plant breeding or genetic engineering methods (for example transgenic crops).

The present invention is further directed to the use of an aqueous composition as described herein, optionally but preferably, diluted with water, as a herbicide for the control of undesired plant growth; as well as directed to a method of controlling undesired plant growth (e.g. weeds) in the presence of cultivated plants, which comprises treating the cultivated plants, plant parts, seed or the locus thereof with a herbicidally effective amount of a composition as described herein. While concentrated compositions are preferred as commercially available goods, the end consumer uses, as a rule, dilute formulations. These formulations may be diluted to concentrations down to between 0.0001 and 5% of active ingredient (a.i.) by weight of total solution. In general the a.i. concentrations are between 0.001 and 3% by weight, preferably 0.005 to 2% by weight. An effective amount is any amount that has the ability to combat the harmful and/or undesired plants.

In other embodiments, the invention includes storage and shipping systems. Typical storage and shipping systems comprise a container ranging in capacity from about 0.1 liter to about 200 liter and a compatibilized aqueous pesticidal composition as described herein located in the container. Typically the formulation will be concentrated. The container may include the standard 2.5 gallon (9.46 liter) containers widely used in the United States, which typically take the form of jugs or flasks with a replaceable screw-cap. These containers are generally designed for single use and are typically not returned to the supplier when empty, instead being disposed of by the end user in accordance with local agricultural chemical container disposal guidelines, procedures, regulations or laws. Commonly, a plurality of these small containers are packaged within a single box and a plurality of such boxes are shipped on a pallet. During shipment, the small containers (usually within boxes on pallets) can be disposed in an enclosed volume such as provided by a rail boxcar or road truck, the hold of a ship or aircraft, or a modular box container adapted for transport by road, rail and water. Larger single-use containers, ranging in capacity up to about 200 liter, for example about 50 liter to about 200 liter, are commonly in the form of drums, and can be shipped in an enclosed volume as described above, one or more per pallet or unpalleted. Formulations of the invention can also be distributed in a large refillable container sometimes known as a bulk or minibulk tank, which typically has an integral pump or connector for an external pump to permit transfer of liquid. Bulk or minibulk tanks having a capacity of about 200 to about 2000 liters or more are typically returned to the supplier when empty and are commonly shipped on a pallet.

### Examples

The description of the ingredients used in the Examples is as follows:

**Table 1**

| Name | Description | Manufacturer |
|---|---|---|
| CE-1095 | Methyl decanoate - fatty acid ester solvent | P&G |
| Agnique 610G | Methyl hexanoate - fatty acid ester solvent | Cognis |
| Agnique ME 890 | Methyl caprylate - fatty acid ester solvent | Cognis |
| Agnique ME 1298 | Methyl laurate - fatty acid ester solvent | Cognis |
| Solvesso 200 ND | Aromatic hydrocarbons, solvent | Exxon |
| Atlas G-5000 | Polyacrylic, polyether - dispersing agent | Croda |
| Synperonic 91/6 | Fatty Alcohol Ethoxylate - dispersing agent | Croda |
| Atlox 4913 | Oxirane - dispersing agent | Croda |
| Rhodopol 23 | Xanthan gum - thickener | Rhodia |
| Proxel BD20 | 1,2-benzisothiazoline-3-one, biocide | Arch Chemicals |
| Silcolapse 430 | Polysiloxane - defoamer | Rhodia |
| Kelzan | Xanthan gum - thickener | Kelco |
| Glycerol | 1,2,3-propantriol, antifreeze | Nordische oelverke |

For comparative purposes the following solvents were used:
Radia 7060; a methyl ester of an unsaturated C18 fatty acid (methyl oleate).
Radia 7961; Rapeseed oil methyl ester, esters of unsaturated fatty acids comprised of several fatty acids, main components C18-C20 fatty acids and primarily C18 fatty acid. Both available from Oleon.

### Example 1

A composition having the following ingredients was prepared:

**Table 2**

| Component | g/ 1000 ml | Component |
|---|---|---|
| Fenoxaprop-P-ethyl | 69 | a1 |
| Florasulam | 4 | a2 |
| CE-1095 | 400 | b |
| Synperonic 91/6 | 50 | c |
| Atlas G-5000 | 20 | c |
| Atlox 4913 | 1.6 | c |
| Cloquintocet-mexyl | 34.5 | d (safener) |
| Glycerol (85%) | 57 | d |
| Rhodopol 23 | 1 | d |
| Proxel BD20 | 0.5 | d |
| Citric Acid Monohydrate | 4 | d (pH buffer) |
| Silcolapse 430 | 1 | d |
| Kelzan | 0.004 | d |
| 7,2 % HCl solution | q.s | d |
| Water | To 1033 g | Solvent |
| **Total** | **1033** | |

### General description of manufacturing process:

Two phases were prepared, an oil phase and an aqueous phase. The aqueous phase was added to the oil phase under vigorous stirring to perform the emulsification. The vigorous stirring was continued until the desired mean droplet size was achieved.

The preparation included 5 steps:
- Oil phase preparation
- Millbase
- Aqueous phase preparation
- Emulsification
- Final adjustments

### Oil phase preparation:

Solvent was charged to vessel. The active ingredient Fenoxaprop-P-ethyl and safener compound, Cloquintocet-mexyl, were added under constant stirring until all solids were dissolved.

### Milllbase:

The batch quantity of water was charged to the formulation vessel. Under high shear mixing, Silcolapse 430, followed by Atlox 4913, Sodium Citrate and Proxel BD 20 were added. Mixing continued until all were dissolved. Florasulam was then charged and the pH of the solution afterwards adjusted to around 4. Kelzan pre-mix was then added under constant stirring.

The base composition was then milled using a WAB Dyno-Mill Multilab (a bead mill) to a particle size of DV50 around 2 µm as measured using a Malvern Mastersizer.

### Aqueous phase preparation:

Water was charged to a vessel. The previously prepared millbase was then added. Glycerol addition was followed by Proxel GXL, Sodium Citrate, Silcolapse 430, Synperonic 91/6 addition and Atlas G-5000 pre-mix charged to the vessel under constant stirring. Stirring was continued until all formulation chemicals were dissolved/ dispersed.

### Emulsification step:

The above aqueous phase was then added to the oil phase and high shear stirring applied until the desired particle size was achieved, a DV50 value of around 1 µm measured by using a Malvern Mastersizer.

### Final adjustments

Viscosity of the formulation was regulated by adding 2 % Rhodopol 23 pre-mix. As a final step the pH was adjusted to 4.5 using aqueous HCl. Formulation was then further stirred 30 minutes to achieve homogeneity.

### Example 2

A series of compositions were prepared using the same method outlined in example 1 but using various fatty acid ester solvents. In addition, similar compositions based on Solvesso 200 ND as an alternative solvent were prepared for a comparative purpose. Solvesso 200 ND or similar blends of aromatic hydrocarbons are often used in oil based compositions comprising pesticides, including herbicidal active compounds. However, they do not have the same environmental friendly profile as the fatty acid ester solvents, but are often preferred because of their good ability to dissolve organic molecules, e.g. pesticides.

pH regulation was made using either HCl (7.2% w/w) or NaOH (1 M) depending on desired pH value of the final compositions.

The base composition was prepared using the following ingredients according to Table 3:

**Table 3**

| Ingredients | Amount (g/l) |
|---|---|
| Fenoxaprop-P-ethyl | 69.0 |
| Cloquintocet-mexyl | 34.5 |
| Florasulam | 4.0 |
| SOLVENT | 388.3 |
| Synperonic 91/6 | 48.5 |
| Atlox 4913 | 1.5 |
| Atlas G-5000 | 19.4 |
| Glycerol (85%) | 55.3 |
| Rhodopol 23 | 1.0 |
| Proxel BD20 | 0.5 |
| Sodium Citrate | 3.9 |
| Silcolapse 430 | 1.0 |
| Kelzan | 0.004 |
| pH regulator | q.s. |
| Water to 1000 ml | |

Using the above base composition a series of compositions were prepared with different solvents and adjustments of pH values. Those used for a comparative purpose are marked "(com)".

The stability of each composition was measured in an accelerated test, which often is carried out at elevated temperatures to extrapolate shelf life of a product. In this case standard accelerated test method was employed. Samples were stored at 54°C for 2 weeks. It is noted that 54°C for 2 weeks often simulates a shelf life of 2 years.

After 2 weeks of storage at 54°C and room temperature, compositions were measured for active ingredients content to check for degradation ratio. The compositions were analysed by straight phase HPLC utilizing a Phenomenex Phenosphere CN column (P/N: 00F-3174-E0) and the mobile phase a mixture of 10% - 20% THF in Hexane. Detection is carried out at 260 nm and 210 nm.

The formulation samples are dissolved appropriately in THF containing 0.05% Triethylamine and analysed using external standard method.

Weight percent degradation of the AIs were calculated by;
% degradation= [(a.i. measured at RT - AI measured at 54°C) / (a.i. measured at RT)] x 100

Results are as found in Table 4a.

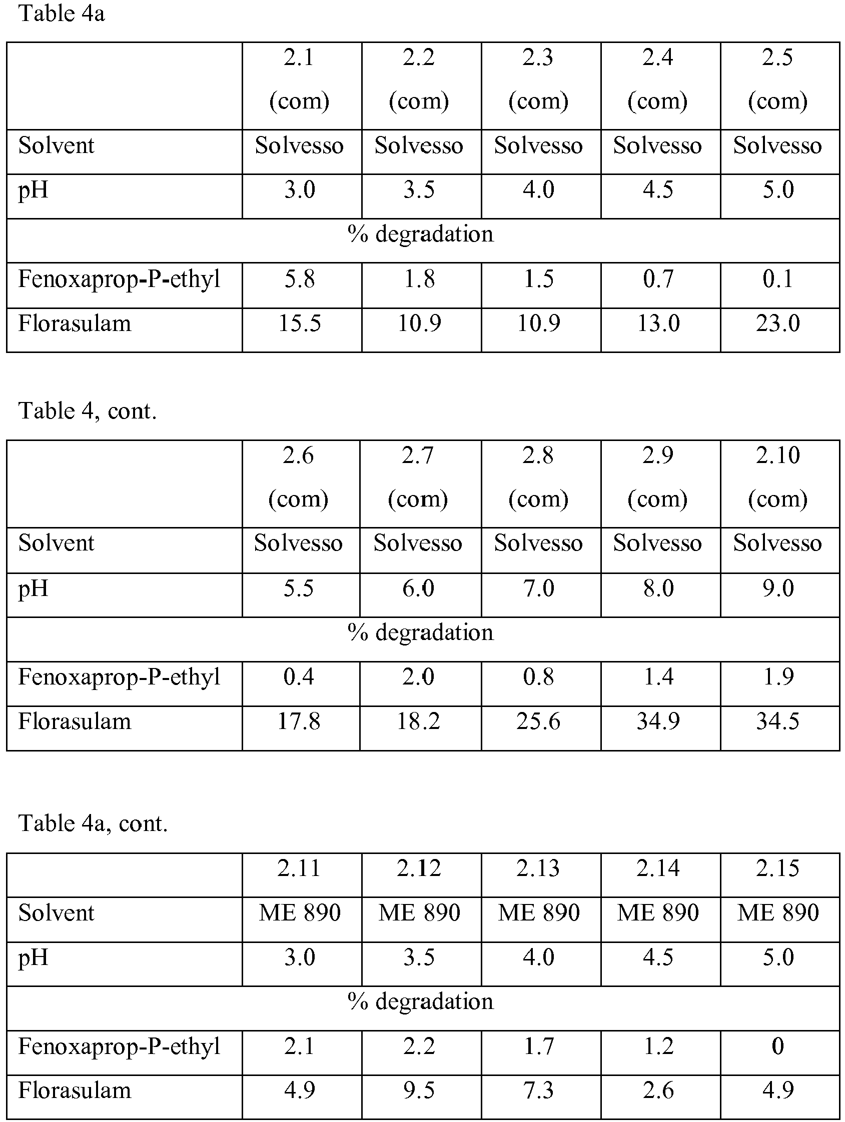

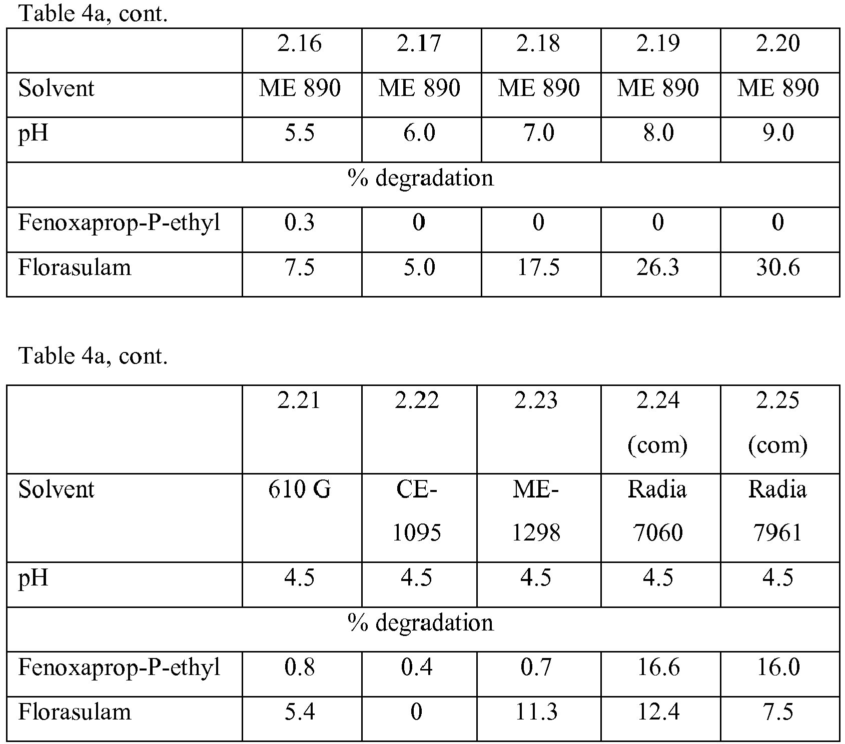

As seen from the examples, use of a fatty acid ester solvents prevents degradation of the active ingredients to a higher extend than another type of solvent often used in agrochemical compositions.

For a comparative purpose, compositions based on Fenoxaprop-P-ethyl and Florasulam separately were prepared at various pH levels using as solvent a methyl ester of an unsaturated C18 fatty acid. Results are as found in table 4b.

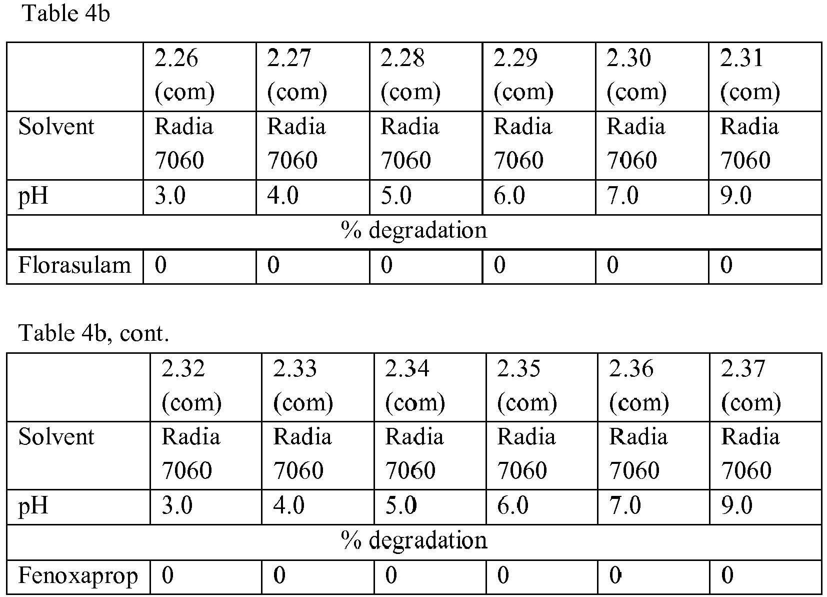

As seen above, the use of a C 18 fatty acid ester does not negatively influence the stability of the individual active ingredients. However, comparing the stability data found of compositions 2.26-2.37 with compositions 2.24-2.25 the use of a C18 fatty acid ester on the other hand does not provide chemical stable compositions comprising both active ingredients.

### Example 3

Using the same base composition as provided in example 2, but with Clodinafop-P-propargyl (69 g/l) used instead of Fenoxaprop-P-ethyl, two compositions were prepared.

**Table 5**

| | 3.1 (com) | 3.2 |
|---|---|---|
| Solvent | Solvesso | ME 890 |
| pH | 4.5 | 4.5 |
| % degradation | | |
| Clodinafop-propargyl | 2.2 | 0 |
| Florasulam | 9.3 | 2.5 |

As demonstrated above methyl caprylate (ME 890) provides better stability over an aromatic hydrocarbon blend (Solvesso 200 ND).

### Example 4

A series of compositions were prepared using the same method outlined in example 1 but without using a millbase step. Addition of all active ingredients to oil phase results in an oil-in-water type formulation.

The composition of the emulsion in water is given in Table 6 below:

**Table 6**

| Ingredients (g/l) | |
|---|---|
| Fenoxaprop-P-ethyl | 69.0 |
| Cloquintocet-mexyl | 34.5 |
| Florasulam | 4.0 |
| Agnique ME 890 | 392.4 |
| DMSO | 39.3 |
| Synperonic 91/6 | 68.7 |
| Atlas G-5000 | 14.7 |
| Propylene Glycol | 55.9 |
| Rhodopol 23 | 1.0 |
| Proxel BD20 | 0.5 |
| Sodium Citrate | 3.9 |
| Silcolapse 430 | 1.0 |
| 7.2 % HCl solution to pH 4.5 | q.s. |
| Water to 1000 ml | |

Stability results can be seen in Table 7 below:

**Table 7**

| % degradation | |
|---|---|
| Fenoxaprop-P-ethyl | 1.0 |
| Florasulam | 4.7 |

## Claims

1. A herbicidal aqueous composition comprising
a) a mixture of
a1) at least one aryloxyphenoxypropionic acid herbicide;
a2) at least one triazolopyrimidine herbicide:
b) one or more C6-C14 fatty acid ester solvent(s)

2. A composition according claim 1, wherein the fatty acid ester solvent is selected among (C1-C10)-alkyl (C6-C 14)-fatty acid esters.

3. A composition according to claims 1 and 2, wherein the fatty acid ester solvent is selected among alkyl esters of fatty acids, the fatty acids part having a carbon chain length of 8-14.

4. A composition according to claim 3, wherein the fatty acid ester solvent is selected among alkyl esters of fatty acids, the fatty acids part having a carbon chain length of 8-12.

5. A composition according to claim 2, wherein the fatty acid ester sovent is selected among alkyl esters of fatty acids, the alkyl part having 1-3 carbon atoms.

6. A composition according to claim 5, wherein the fatty acid ester solvent is selected among methyl esters of fatty acids.

7. A composition according to claim 6, wherein the fatty acid additive is selected among methyl esters of fatty acids, the fatty acids part having a carbon chain length of 6-14.

8. A composition according to claim 1, wherein the aryloxyphenoxypropionic acid herbicide a1) is selected among fenoxaprop, fenoxaprop-P, quizalofop-P, quizalofop-P, fluazifop, fluazifop-P, haloxyfop , haloxyfop-P, cyhalofop, clodinafop, and esters thereof;
and the triazolopyrimidine herbicide a2) is chosen among florasulam, cloransulam, diclosulam, flumetsulam, metosulam, penoxsulam, and pyroxsulam.

9. A composition according to any of the previous claims further comprising, as component c), at least one adjuvant.

10. A composition according to claim 9 further comprising, as component d), one or more one or more inert formulation auxiliaries.

11. A composition according to any of the previous claims wherein the pH value is lower than 9.

12. A herbicidal aqueous compositions according to any of claims 1-11 comprising
a) 1-500 g/l a mixture of
a1) at least one aryloxyphenoxypropionic acid herbicide;
a2) at least one triazolopyrimidine herbicide:
b) 1-800 g/l of one or more C6-C14 fatty acid ester solvent(s)
c) 0-600 g/l of one or more adjuvants.
d) 0-200 g/l of one or more one or more customary inert formulation auxiliaries;
and water to 1 liter.

13. A storage and shipping system comprising:
A container having a capacity of about 0.1 liter to about 200 liter; and
a compatibilized herbicidal aqueous composition according to item 1 substantially filling the container.

14. Use of a herbicidal aqueous composition according to claim 1 optionally diluted with water as a herbicide for the control of undesired plant growth.

15. A method of controlling undesired plant growth in the presence of cultivated plants, said method comprises treating the plants, plant parts, seed or the locus thereof with a herbicidally effective amount of an optionally diluted herbicidal aqueous composition according to claim 1.
